(19) Europäisches Patentamt
European Patent Office
Office européen des brevets

(11) **EP 2 010 701 B1**

(12) **EUROPÄISCHE PATENTSCHRIFT**

(45) Veröffentlichungstag und Bekanntmachung des Hinweises auf die Patenterteilung:
**01.06.2016** Patentblatt **2016/22**

(51) Int Cl.:
*D01F 9/127* *(2006.01)*     *C01B 31/02* *(2006.01)*
*D01F 9/133* *(2006.01)*     *B01J 8/24* *(2006.01)*

(21) Anmeldenummer: **07724198.2**

(22) Anmeldetag: **12.04.2007**

(86) Internationale Anmeldenummer:
**PCT/EP2007/003257**

(87) Internationale Veröffentlichungsnummer:
**WO 2007/118668 (25.10.2007 Gazette 2007/43)**

(54) **VERFAHREN ZUR HERSTELLUNG VON KOHLENSTOFFNANORÖHRCHEN IN EINER WIRBELSCHICHT**

METHOD FOR THE PRODUCTION OF CARBON NANOTUBES IN A FLUIDIZED BED

PROCÉDÉ DE PRODUCTION DE NANOTUBES DE CARBONE DANS UN LIT FLUIDISÉ

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **15.04.2006 DE 102006017695**

(43) Veröffentlichungstag der Anmeldung:
**07.01.2009** Patentblatt **2009/02**

(73) Patentinhaber: **Covestro Deutschland AG**
**51373 Leverkusen (DE)**

(72) Erfinder:
• **BUCHHOLZ, Sigurd**
  **50767 Köln (DE)**
• **KAKHI, Maziar**
  **Potomac, MD 20854 (US)**
• **MICHELE, Volker**
  **51065 Köln (DE)**
• **MLECZKO, Leslaw**
  **41542 Dormagen (DE)**
• **MÜNNICH, Christian**
  **51377 Leverkusen (DE)**
• **RUDOLF, Reiner**
  **51373 Leverkusen (DE)**
• **WOLF, Aurel**
  **42489 Wülfrath (DE)**

(74) Vertreter: **Levpat**
**c/o Covestro AG**
**Alfred-Nobel-Straße 10**
**40789 Monheim am Rhein (DE)**

(56) Entgegenhaltungen:
**EP-A- 1 375 424     EP-A1- 1 391 425**
**US-A- 4 767 737**

• **WANG YAO ET AL: "Agglomerated carbon nanotubes and its mass production in a fluidized-bed reactor" PHYSICA B. CONDENSED MATTER, AMSTERDAM, NL, Bd. 323, Nr. 1-4, 3. Oktober 2001 (2001-10-03), Seiten 327-329, XP002254672 ISSN: 0921-4526**
• **VENEGONI D ET AL: "Parametric study for the growth of carbon nanotubes by catalytic chemical vapor deposition in a fluidized bed reactor" CARBON, ELSEVIER SCIENCE LTD, Bd. 40, Nr. 10, August 2002 (2002-08), Seiten 1799-1807, XP004371679 ISSN: 0008-6223**
• **WANG YAO ET AL: "Fluidization and agglomerate structure of SiO2 nanoparticles" POWDER TECHNOLOGY, ELSEVIER SEQUOIA, LAUSANNE, CH, Bd. 124, Nr. 1-2, 8. April 2002 (2002-04-08), Seiten 152-159, XP002453431 ISSN: 0032-5910**

**Beschreibung**

Die vorliegende Erfindung betrifft ein Verfahren zur Herstellung von Kohlenstoffnanoröhrchen durch Zersetzung von Kohlenwasserstoffen an einem heterogenen Katalysator in einem Wirbelschichtreaktor, wobei der Reaktor absatzweise oder kontinuierlich betrieben werden kann und im kontinuierlichen Betriebsfall der Austrag sichtend oder nichtsichtend erfolgen kann.

Unter Kohlenstoffnanoröhrchen werden hier zylinderförmige Kohlenstoffröhren mit einem Durchmesser zwischen 3-150 nm, bevorzugt 3 und 80 nm verstanden, die Länge beträgt ein Vielfaches, mindestens 100-faches, des Durchmessers. Diese Röhrchen bestehen aus Lagen geordneter Kohlenstoffatome und weisen einen in der Morphologie unterschiedlichen Kern auf. Diese Kohlenstoffnanoröhrchen werden beispielsweise auch als "Carbon Nanotubes", "Carbon Fibrils" oder "Hollow Carbon Fibres" bezeichnet. Die beschriebenen Kohlenstoffnanoröhrchen haben aufgrund ihrer Dimensionen und ihrer besonderen Eigenschaften eine technische Bedeutung für die Herstellung von Kompositmaterialien. Wesentliche weitere Möglichkeiten liegen in Elektronik-, Energie- und weiteren Anwendungen.

Die Herstellung von Kohlenstoffnanoröhrchen mit Durchmessern kleiner 100 nm ist unter anderem auch in WO A 86/03455 A1 beschrieben. Für die Herstellung werden hier leichte (d. h. kurz- und mittelkettige aliphatische oder ein- oder zweikernige aromatische) Kohlenwasserstoffe und ein auf Eisen basierender Katalysator beschrieben, an dem Kohlenstoffträger bei Temperaturen oberhalb von 800-900°C zersetzt werden. Die bekannten Methoden umfassen beispielsweise Lichtbogen-, Laserablations- und katalytische Verfahren. Bei vielen dieser Verfahren werden Ruß, amorpher Kohlenstoff und Fasern mit großen Durchmessern als Nebenprodukte gebildet. Bei den katalytischen Verfahren kann zwischen der Abscheidung an geträgerten Katalysatorpartikeln und der Abscheidung an in-situ gebildeten Metallzentren mit Durchmessern im Nanometerbereich (sogenannte Flow-Verfahren) unterschieden werden. Bei der Herstellung über die katalytische Abscheidung von Kohlenstoff aus bei Reaktionsbedingungen gasförmigen Kohlenwasserstoffen (im folgenden CCVD; Catalytic Chemical Vapour Deposition) werden als mögliche Kohlenstoffspender Acetylen, Methan, Ethan, Ethylen, Butan, Buten, Butadien, Benzol und weitere, Kohlenstoff enthaltende Edukte genannt. Die Katalysatoren beinhalten in der Regel Metalle, Metalloxide oder zersetzbare bzw. reduzierbare Metallkomponenten. Beispielsweise sind im Stand der Technik als Metalle Fe, Mo, Ni, V, Mn, Sn, Co, Cu und weitere genannt. Die einzelnen Metalle haben meist zwar eine Tendenz, Nanotubes zu bilden, allerdings werden laut Stand der Technik hohe Ausbeuten und geringe Anteile amorpher Kohlenstoffe vorteilhaft mit Metallkatalysatoren erreicht, die eine Kombination der oben genannten Metalle enthalten. Besonders vorteilhafte Systeme basieren gemäß Stand der Technik auf Kombinationen, die Fe oder Ni enthalten. Die Bildung von Kohlenstoffnanoröhrchen und die Eigenschaften der gebildeten Röhrchen hängen in komplexer Weise von der als Katalysator verwendeten Metallkomponente oder einer Kombination mehrerer Metallkomponenten, dem verwendeten Trägermaterial und der Wechselwirkung zwischen Katalysator und Träger, dem Eduktgas und-partialdruck, einer Beimischung von Wasserstoff oder weiteren Gasen, der Reaktionstemperatur und der Verweilzeit bzw. dem verwendeten Reaktor ab. Eine Optimierung des Herstellungsverfahrens stellt eine besondere Herausforderung für einen technischen Prozess dar.

Die bei der CCVD verwendete und als Katalysator bezeichnete Metallkomponente wird im Laufe des Syntheseprozesses verbraucht. Dieser Verbrauch ist auf eine Desaktivierung der Metallkomponente zurückzuführen, z. B. aufgrund von Abscheidung von Kohlenstoff auf dem gesamten Partikel, die zur vollständigen Bedeckung des Partikels führt (dem Fachmann ist dies als "Encapping" bekannt). Eine Reaktivierung ist in der Regel nicht möglich bzw. wirtschaftlich nicht sinnvoll. Es werden oftmals nur wenige Gramm Kohlenstoffnanoröhrchen pro Gramm Katalysator erhalten, wobei der Katalysator hier die verwendete Gesamtheit von Träger und Katalysator umfasst. Aufgrund des geschilderten Verbrauchs an Katalysator stellt eine hohe Ausbeute an Kohlenstoffnanoröhrchen bezogen auf den eingesetzten Katalysator eine wesentliche Anforderung an Katalysator und Verfahren dar.

Für eine technische Herstellung von Kohlenstoffnanoröhrchen z. B. als Bestandteil zur Verbesserung der mechanischen Eigenschaften oder Leitfähigkeit von Kompositmaterialien ist wie bei allen technischen Verfahren eine hohe Raum-Zeit-Ausbeute bei Erhaltung der besonderen Eigenschaften der Nanoröhrchen sowie Minimierung der aufzuwendenden Energie und Betriebsstoffe anzustreben. Verschiedene in der Literatur beschriebene Verfahren zur Herstellung von Kohlenstoffnanoröhrchen durch CCVD zeigen zwar die prinzipielle Eignung verschiedener Katalysatoren, weisen oftmals aber nur eine geringe Produktivität auf.

Zur Herstellung von Kohlenstoffnanoröhrchen sind verschiedene Verfahren und Katalysatoren bekannt. Einen Überblick über Methoden zur Herstellung geben beispielsweise Geus und DeJong in einem Übersichtsartikel (K.P. De Jong und J.W. Geus in Catal. Rev.-Sci. Eng., 42(4), 2000, Seiten 481-510). Es können sowohl reine Metalle als auch Kombinationen verschiedener Metalle eingesetzt werden, wie z. B. WO 03/004410 A1, US -A- 6 358 878, US -A- 6518218, CN 1443708 beschrieben.

Der Herstellung von Carbon Nanotubes mittels CCVD in der Wirbelschicht widmet sich eine Reihe von Arbeiten. In CA 2374848 A1 wird als möglicher Wirbelschichtprozess für die Massenproduktion von Carbon Nanotubes ein Verfahren dargelegt, bei dem mit Acetylen als Kohlenstoffdonator an einem Kobalt-Katalysator eine Ausbeute von 3 g CNTs / g Katalysator erzielt wird. Diese vergleichsweise sehr geringe Ausbeute lässt den Prozess hinsichtlich der Gewährleistung der Fluidisierung unkritisch erscheinen, macht allerdings aufwendige Aufreinigungsschritte erforderlich, um ein für die Anwendung geeignetes Produkt zu erhalten.

Ebenfalls nur sehr geringe Ausbeuten (max. 0,35 g CNTs / g Katalysator) erzielen Mauron et al. (Ph. Mauron et al. "Fluidised-bed CVD synthesis of carbon nanotubes on Fe2O3/MgO", Diamond and Related Materials 12 (2003) 780-785) bei der Herstellung von CNTs aus Iso-Pentan bzw. Acetylen an einem Eisen-Katalysator in einem Wirbelschichtreaktor im Labormaßstab.

EP 1399384 A2 beschreibt die Herstellung von Carbon Nanotubes in einer Wirbelschicht mit vorgeschaltetem Reaktor zur Inline-Katalysatorherstellung, wobei der Katalysator eine mittlere Partikelgröße zwischen 10 μm und 1000 μm aufweisen kann und ein Volumenzuwachs der Agglomerate bis zum zwanzigfachen der Katalysatormenge erreicht werden kann.

Venegoni et al. (D. Venegoni, et al. "Parametric study for the growth of carbon nanotubes by catalytic chemical vapor deposition in a fluidized bed reactor", Carbon 40 (2002) 1799-1807) beschreiben ebenfalls die Herstellung von CNTs in einer Laborwirbelschicht. Der eingesetzte Eisen-Katalysator liefert mit Ethylen als Kohlenstoff-Donator allerdings nur eine sehr niedrige Ausbeute von maximal 50 % bezogen auf die eingesetzte Katalysatormasse.

EP 1375424 A1 beschreibt die Herstellung von Carbon Nanotubes an einem Katalysator aus Eisen, Nickel oder Kobalt, wobei zur Gewährleistung der Fluidisierung im Reaktor geeignete Partikeln als zusätzliches Fluidisierungshilfsmittel zugegeben werden (Powder-Particle-Bett). Dies hat allerdings eine reduzierte Raum-Zeit-Ausbeute des Verfahrens zur Folge und macht eine aufwendige Abtrennung und Rückhaltung des Fluidisierungshilfsmittels erforderlich.

In WO 90/07023 A1 wird die Herstellung von Carbon Nanotubes in einer Wirbelschicht an Katalysatoren beschrieben, die Eisen, Molybdän, Kobalt, Nickel, Platin, Vanadium oder Chrom oder Kombinationen dieser Elemente enthalten. Dabei werden Ausbeuten zwischen 30 und 200 g CNTs / g Katalysatormetall beschrieben; bezogen auf den gesamten Katalysator inklusive Trägermaterial fällt die Ausbeute allerdings niedrig aus. Bezüglich der einzusetzenden Partikelgrößenfraktion des Katalysators werden Vorzugsbereiche zwischen 50 μm und 300 μm genannt, allerdings ohne systematische Begründung und nähere Einschränkung hinsichtlich der Aufrechterhaltung der Fluidisierung während des Wachstums der CNT-Agglomerate.

Corrias et al. (M. Corrias et al., "Carbon nanotubes produced by fluidized bed catalytic CVD: first approach of the process", Chemical Engineering Science 58 (2003) 4475-4482) beobachten in ihren Versuchen mit einem Eisen-Katalysator in einem Wirbelschichtreaktor im Labormaßstab bei absatzweiser Fahrweise einen Anstieg der Mindestfluidisierungsgeschwindigkeit vom Versuchsbeginn (reiner Katalysator) zum Versuchsende (CNT-Agglomerate) von 20%.

Hao et al. (Y. Hao et al., "Agglomerated CNTs synthesized in a fluidized bed reactor: Agglomerate structure and formation mechanism", Carbon 41 (2003) 2855-2863) beschreiben Wirbelschichtexperimente mit einem auf Eisen und Molybdän basierenden Katalysator, wobei während der Versuche der mittlere Außendurchmesser von 100 μm auf 500 μm anwuchs und die Schüttdichte von 1100 kg/m$^3$ auf 40 kg/m$^3$ abnahm.

EP 1391425 A1 beschreibt die Herstellung von Carbon Nanotubes in einer Wirbelschicht, wobei der Außendurchmesser im Bett (Katalysator und CNT-Agglomerate) zwischen 1 μm und 1000 μm und die Schüttdichte zwischen 20 kg/m$^3$ und 800 kg/m$^3$ variiert, die Spreizung der für die Fluidisierung relevanten Partikeleigenschaften also noch größer ist.

Zusammenfassend bieten die im Stand der Technik beschriebenen Verfahren inkl. Katalysatoren keine systematischen Strategien, um die Fluidisierung in Wirbelschichtprozessen mit derart effektiven Katalysatoren sicher und tauglich für die Maßstabsübertragung zu gewährleisten. Bei einer langen Lebensdauer des Katalysators vor der Desaktivierung z. B. durch Einkapselung mit amorphem Kohlenstoff werden die in der Wirbelschicht entstehenden CNTs sehr lang und die Agglomerate sehr groß, so dass es zu einem Konflikt zwischen Aufrechterhaltung der Fluidisierung der großen Agglomerate und Austrag der feinen Katalysatorpartikeln kommt.

Die Aufgabe der vorliegenden Erfindung bestand daher darin, ein Verfahren zur Herstellung von mehrlagigen Kohlenstoffnanoröhrchen mit Durchmessern von 3 bis 150 nm, bevorzugt 3 bis 80 nm, und einem Aspektverhältnis von L : D > 100 (Verhältnis von Durchmesser zu lateraler Ausdehnung) in einer Wirbelschicht zu entwickeln, das einen störungs- und unterbrechungsfreien Betrieb der Anlage bei größtmöglicher Produktausbeute erlaubt. Insbesondere sollte das erfindungsgemäße Verfahren eine Defluidisierung des Reaktorinhaltes durch zu groß aufwachsende Kohlenstoffnanoröhrchen-Agglomerate, wie sie beim Einsatz von optimierten Katalysatoren mit hoher Ausbeute auftreten kann, zuverlässig unterbinden. Eine weitere Anforderung an das Verfahren war seine Realisierung im Produktionsmaßstab.

Überraschenderweise wurde die Aufgabe im erfindungsgemäßen Verfahren zur Herstellung von Kohlenstoffnanoröhrchen durch Zersetzung eines gasförmigen Kohlenwasserstoffs an einem heterogenen Katalysator in einer Wirbelschicht gelöst, indem eine Defluidisierung des Reaktorinhaltes durch zu groß aufwachsende Kohlenstoffnanoröhrchen-Agglomerate, d. h. Agglomerate, deren Sinkgeschwindigkeit infolge ihrer Größe und / oder Partikeldichte oberhalb der im Reaktor herrschenden Gasgeschwindigkeit liegt, durch eine Anpassung der Gasgeschwindigkeit im Reaktor an die Durchmesserverteilungen des zugegebenen Katalysators und des entnommenen Produkts vermieden wird. Gegenstand der Erfindung ist somit ein Verfahren zur Herstellung von Kohlenstoffnanoröhrchen durch Zersetzung eines gasförmigen Kohlenwasserstoffs an einem ggf. geträgerten heterogenen Katalysator, insbesondere auf Basis von Mangan und Cobalt und ggf. Molybdän, in einem Wirbelschichtreaktor, dadurch gekennzeichnet, dass die in den Wirbelschichtreaktor gegebenen Katalysatorpartikeln einen Außendurchmesser im Bereich von 30 $\mu$m bis 600 $\mu$m aufweisen, die Partikelgrößen von Katalysator und Kohlenstoffnanoröhrchen-Agglomeraten so gewählt sind, dass das Verhältnis von Gasleerrohrgeschwindigkeit zu Mindestfluidisierungsgeschwindigkeit für alle im Wirbelschichtreaktor vorhandenen Katalysator- und Agglomeratpartikeln zwischen 1,1 und 60 liegt und gleichzeitig die Gasgeschwindigkeit im Reaktor unterhalb der Sinkgeschwindigkeit der Partikel festgelegt oder eine Vorrichtung zur Rückführung ausgetragener Partikel eingesetzt wird und wobei die Abfuhr der gebildeten Kohlenstoffnanoröhrchen aus dem Reaktor mittels einer Sichter-Vorrichtung erfolgt, welche nur Kohlenstoffnanoröhrchen-Agglomerate oberhalb eines definierten Mindestdurchmessers aus dem Reaktor entfernt.

Die Partikelgrößen von Katalysator (kleinster auftretender Durchmesser) und Kohlenstoffnanoröhrchen-Agglomeraten (maximal auftretender Durchmesser) werden so gewählt, dass das Verhältnis von Gasgeschwindigkeit zu Mindestfluidisierungsgeschwindigkeit für alle im Reaktor vorhandenen Partikeln zwischen 1,1 und 60 liegt, bevorzugt ist ein Geschwindigkeitsverhältnis zwischen 2 und 30, besonders bevorzugt zwischen 5 und 20 und gleichzeitig die Gasgeschwindigkeit im Reaktor unterhalb der Sinkgeschwindigkeit der Partikeln festgelegt wird oder eine Vorrichtung zur Rückführung ausgetragener Partikeln wie z. B. ein Zyklon eingesetzt. Diese Maßnahmen dienen zur Vermeidung von Feststoffaustrag für alle Partikeln im Reaktor.

Mit dem erfindungsgemäßen Verfahren können mehrlagige Kohlenstoffnanoröhrchen mit mittleren Außendurchmessern von 3 bis 150 nm, bevorzugt 3 und 80 nm, und einem Aspektverhältnis von L : D > 100 mit einem Ergebnis von 0,1 bis 500 g Kohlenstoffnanoröhrchen / g Katalysator, bevorzugt 5 bis 200 g Kohlenstoffnanoröhrchen / g Katalysator, besonders bevorzugt 20 bis 150 g Kohlenstoffnanoröhrchen / g Katalysator hergestellt werden. Mit dem erfindungsgemäßen Verfahren konnte eine Defluidisierung des Reaktorinhaltes durch zu groß aufwachsende Kohlenstoffnanoröhrchen-Agglomerate, wie sie beim Einsatz von optimierten Katalysatoren mit hoher Ausbeute auftreten kann, zuverlässig unterbunden werden.

Weiterer Gegenstand der vorliegenden Erfindung ist außerdem die Vorgehensweise zur Bestimmung des optimalen Gasgeschwindigkeitsbereiches für den bezüglich der Katalysatorzufuhr und des Abzugs der Kohlenstoffnanoröhrchen-Agglomerate absatzweisen und kontinuierlichen Betrieb, wobei für letzteren die Fälle von sichtendem und nicht-sichtendem Austrag unterschieden werden.

Zur Durchführung des erfindungsgemäßen Verfahrens kann mit Hilfe einer relativ einfachen Berechnung die optimale Gasgeschwindigkeit im Reaktor abhängig von Katalysator- und CNT-Agglomeratgröße, Partikeldichten und Gaseigenschaften sehr präzise eingegrenzt werden, wenn der in den Reaktor gegebene Katalysator in einer genau definierten engen Partikelgrößenfraktion vorliegt.

Überraschenderweise wurde festgestellt, dass der entstehende CNT-Agglomeratdurchmesser bei ansonsten konstant gehaltenen Reaktionsbedingungen und Wachstumszeiten eine deutliche Abhängigkeit von der Partikelgröße des zugegebenen Katalysators aufweist, offensichtlich der entstehende Agglomeratdurchmesser also nicht durch Abrasionsprozesse reduziert wird, wie man es bei fraktal wachsenden Strukturen für gewöhnlich beobachten kann.

Bei der Berechnung des optimalen Bereiches der Gasgeschwindigkeit für die Produktion von CNTs in einer Wirbelschicht wird davon ausgegangen, dass aus vorhergehenden Versuchen der maximal entstehende Agglomeratdurchmesser und die zugehörige Agglomeratdichte bekannt sind; auch die Stoffdaten des bei der Reaktion eingesetzten Gases oder Gasgemisches werden als bekannt vorausgesetzt. Mittels aus der Literatur zu entnehmenden Korrelationen kann dann als erstes die zu einem maximalen Agglomeratdurchmesser gehörige Mindestfluidisierungsgeschwindigkeit berechnet werden, also die Gasgeschwindigkeit im Reaktor, bei welcher das maximal große Agglomeratpartikel gerade noch fluidisiert wird und nicht nach unten auf den Reaktorboden sedimentiert. Ausgehend von dieser Mindestfluidisierungsgeschwindigkeit wird dann eine Betriebs-Gasgeschwindigkeit definiert, die deutlich oberhalb der Mindestfluidisierungsgeschwindigkeit liegt, aber gleichzeitig noch einen hinreichenden Abstand zur maximal zulässigen Gasgeschwindigkeit aufweist, bei welcher das Agglomerat nach oben aus dem Reaktor ausgetragen würde (diese Maximalgeschwindigkeit lässt sich ebenfalls mittels Literaturkorrelationen als Sinkgeschwindigkeit des Agglomerats berechnen). Mit der gewählten Betriebs-Gasgeschwindigkeit lässt sich nunmehr bei bekannter Dichte der Katalysatorpartikeln der minimal zulässige Durchmesser der Katalysatorpartikeln ermitteln, also derjenige Durchmesser, dessen wiederum mittels Literaturkorrelationen ermittelte Sinkgeschwindigkeit gerade der Betriebs-Gasgeschwindigkeit entspricht. Der geschilderte Rechengang kann umgekehrt auch genutzt werden, um iterativ für einen gegebenen minimalen Katalysatordurchmesser die optimale Betriebs-Gasgeschwindigkeit zu bestimmen, bei der die entstehenden Agglomerate noch sicher fluidisiert werden können.

Die Fragestellung lautet: Wie klein ist das kleinste Katalysatorpartikel (bezeichnet durch $d_{Kat,min}$), das bei einem gegebenen maximalen Agglomeratdurchmesser ($d_{p,max}$) und der dazugehörigen Betriebs-Gasgeschwindigkeit nicht aus dem Reaktor ausgetragen wird? Im Einzelnen sieht der Rechengang zur Bestimmung des minimalen Katalysatordurchmessers (bzw. der Betriebs-Gasgeschwindigkeit bei gegebenem minimalem Katalysatordurchmesser) wie folgt aus:

(1) Die Betriebsbedingungen und Partikeleigenschaften werden zunächst herangezogen, um eine Mindestfluidisierungsgeschwindigkeit, $U_{mf}$, der Agglomerate zu bestimmen (Kunii, D. und Levenspiel, O., Fluidization Engineering, 2. Auflage, Butterworth-Heinemann, 1991, S.70):

$$U_{mf} = \frac{\eta_G}{d_P \rho_G} \left\{ \left[ 33{,}7^2 + 0{,}0408 \cdot \frac{d_P^3 \rho_G (\rho_P - \rho_G) \cdot g}{\eta_G^2} \right]^{\frac{1}{2}} - 33{,}7 \right\} \qquad (1)$$

In Gl. (1) werden Koeffizienten aus der Studie von Wen und Yu (AIChE J., 12, 610,1966) für sogenannte *"feine Partikeln"* eingesetzt. Den Symbolen werden folgende Bedeutungen zugeordnet (in SI-Einheiten):

- $\eta_G$, Dynamische Viskosität des Gasgemisches bei der Betriebstemperatur

- $\rho_G$, Dichte des Gasgemisches bei der Betriebstemperatur

- $d_p$, Außendurchmesser des Agglomerates, betrachtet in dieser Analyse als der angegebene Maximaldurchmesser, $d_{p,max}$

- $\rho_P$, Partikeldichte des Agglomerates

- g, Erdbeschleunigung

Die Mindestfluidisierungsgeschwindigkeit wird für den größten zu erwartenden Agglomeratdurchmesser $d_{p,max}$ bestimmt.

(2) Die Betriebsgeschwindigkeit, $U_o$, entspricht einem Mehrfachen von $U_{mf}$ für den größten zu erwartenden Agglomeratdurchmesser, um eine adäquate Fluidisierung zu gewährleisten.

(3) Die Sinkgeschwindigkeit des Katalysatorpartikels, $U_t$, wird mittels der Korrelation von Haider und Levenspiel (zitiert im oben genannten Werk vom Kunii und Levenspiel (Fluidization Engineering, 2. Auflage, Butterworth-Heinemann, 1991, S.80) berechnet, wie folgt:

$$U_t = \left( \frac{\eta_G (\rho_{Kat} - \rho_G) \cdot g}{\rho_G^2} \right)^{1/3} \cdot \left[ \frac{18}{d_{Kat}^2} \cdot \left( \frac{\eta_G^2}{\rho_G (\rho_{Kat} - \rho_G) \cdot g} \right)^{2/3} + \frac{(2{,}335 - 1{,}744 \cdot \phi_s)}{d_{Kat}^{1/2}} \cdot \left( \frac{\eta_G^2}{\rho_G (\rho_{Kat} - \rho_G) \cdot g} \right)^{1/6} \right]^{-1} \qquad (2)$$

Hierzu wird ein Formfaktor, $\phi_s = 1$, angenommen. $\rho_{Kat}$ und $d_{Kat}$ entsprechen der Katalysatordichte bzw. dem Katalysatordurchmesser. Die anderen Symbole sind bereits oben definiert.

(4) & (5) Um den minimalen Katalysatordurchmesser zu charakterisieren, der bei der herrschenden Betriebsgeschwindigkeit, $U_o$, nicht aus dem Wirbelschichtreaktor ausgetragen wird, wird mit Hilfe der obigen Gleichung für die Sinkgeschwindigkeit nach demjenigen $d_{Kat}$-Wert gesucht, bezeichnet durch $d_{Kat,min}$, der die Bedingung $U_t(d_{Kat,min}) = U_o(d_{p,max})$ erfüllt.

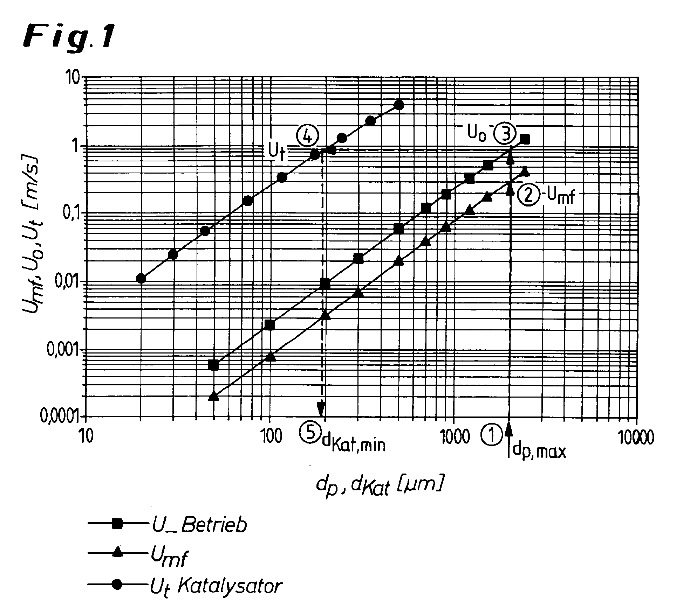

Abbildung 1 zeigt eine grafische Verdeutlichung des Berechnungsverfahrens für die erfindungsgemäße Verfahrensführung. Die Zahlen in der Abbildung 1 entsprechen den nummerierten Schritten in dem oben geschilderten Rechengang.

Im erfindungsgemässen Verfahren werden die jenigen Kohlenstoffnanoröhrchen-Agglomerate aus dem Reaktor entfernt, die den vorgesehenen maximalen Agglomeratdurchmesser erreicht haben. Diese Ausführung kann auf verschiedene Arten realisiert werden. Bei bezüglich Katalysatorzufuhr und Produktentnahme absatzweiser Fahrweise des Reaktors nach der erfindungsgemäßen Verfahrensführung kann nach Ablauf der Wachstumszeit die Zufuhr des Eduktgases zum Reaktor beendet und das fertige Produkt mittels einer geeigneten Austragsvorrichtung aus dem Reaktor entnommen werden. Nach Zugabe einer neuen Charge frischer Katalysatorpartikeln mit für die erfindungsgemäße Verfahrensführung passender Partikelgrößenverteilung kann dann mit der Produktion der nächsten Charge von Kohlenstoffnanoröhrchen-Agglomeraten begonnen werden.

In einer bevorzugten Ausführungsform des Verfahrens wird der Reaktor kontinuierlich hinsichtlich Katalysatorzufuhr und Produktaustrag betrieben. In diesem Falle ist die Verweilzeit der Katalysatorpartikeln im Reaktor so zu wählen, dass keine Agglomerate entstehen, deren Mindestfluidisierungsgeschwindigkeit oberhalb der im Reaktor herrschenden Betriebs-Gasgeschwindigkeit liegt, was zu unerwünschten Ablagerungen im Reaktor führen würde.

In einer besonders bevorzugten Ausführungsform des Verfahrens wird der kontinuierlich hinsichtlich Katalysatorzufuhr und Produktaustrag betriebene Reaktor mit einer sichtenden Austragsvorrichtung versehen (sichtender Austrag). Diese Vorrichtung sorgt dafür, dass nur Agglomerate mit einem Durchmesser oberhalb eines gewählten Maximaldurchmessers aus dem Reaktor ausgetragen werden und kleinere Partikeln im Reaktor verbleiben. Die Realisierung dieser besonders bevorzugten Variante der erfindungsgemäßen Verfahrensführung kann z. B. erfolgen mittels eines Windsichters (z. B. Zickzack-Sichter, Spiralwindsichter, Querstromsichter) oder mittels Siebung und Rückführung des Feingutes in den Reaktor.

Der zur Durchführung des Verfahrens eingesetzte Reaktor kann aus geeignetem hochwarmfesten Stahl oder aus hinsichtlich katalytischer Effekte inertem Material wie z. B. Graphit oder auch Quarzglas bestehen.

Die in den Wirbelschichtreaktor gegebenen Katalysatorpartikeln können in allen vorstehend beschriebenen Varianten des erfindungsgemäßen Verfahrens Außendurchmesser im Bereich von 30 $\mu$m und 600 $\mu$m, in einer bevorzugten Variante zwischen 30 $\mu$m und 90 $\mu$m. Die Messung der Partikelgrößenverteilung kann dabei z. B. mittels Laserbeugung oder durch Siebung erfolgen.

Die Abfuhr der gebildeten Kohlenstoffnanoröhrchen aus dem Reaktor erfolgt mittels einer Sichter-Vorrichtung, welche nur Kohlenstoffnanoröhrchen-Agglomerate oberhalb eines definierten Mindestdurchmessers, insbesondere oberhalb von 1 $\mu$m, aus dem Reaktor entfernt. Eine derartige Sichtervorrichtung kann intern im Reaktor eingebaut sein oder extern außerhalb des Reaktors angeordnet und mit diesem über einen Förderkreislauf verbunden sein. Sie kann z. B. aus geeigneten Sieben aufgebaut sein, oder es kann eine Windsichtung z. B. mittels eines Zickzack-Sichters erfolgen.

Die Herstellung der Kohlenstoffnanoröhrchen kann bei Drücken oberhalb und unterhalb des Atmosphärendrucks erfolgen. Das Verfahren kann bei Absolutdrücken von 0,05 bar bis 200 bar durchgeführt werden, bevorzugt sind Drücke von 0,1 bis 100 bar, besonders bevorzugt sind Drücke von 0,2 bis 10 bar.

Der Reaktor wird von außen beheizt, die Temperatur kann im Temperaturbereich von 300°C bis 1600°C variiert werden. Sie muss jedoch so hoch sein, dass die Abscheidung von Kohlenstoff durch Zersetzung mit genügender Geschwindigkeit stattfindet und darf nicht zu einer deutlichen Selbstpyrolyse des Kohlenwasserstoffs in der Gasphase führen. Dies würde zu einem hohen Anteil von nicht bevorzugtem amorphen Kohlenstoff im resultierenden Material führen. Der vorteilhafte Temperaturbereich liegt zwischen 500°C und 800°C. Bevorzugt ist eine Zersetzungstemperatur von 550°C bis 750°C.

Der Katalysator kann vor dem Einbringen in den eigentlichen Reaktionsraum reduziert werden, in einer oxidischen Form der hauptsächlich katalytisch aktiven Metalle zugegeben oder sogar in der Form der gefällten Hydroxide oder Carbonate zugegeben werden. Generell als Katalysatoren geeignet sind Übergangsmetalle und deren Legierungen, wie sie in den im Stand der Technik aufgeführten Texten umfangreich beschrieben werden. Ohne Beschränkung der Allgemeinheit seien hier nur einige Beispiele aufgeführt.

Dem Fachmann erschließt sich anhand des Standes der Technik, dass eine Vielzahl Kombinationen von Metallen als potenziell attraktive Katalysatormaterialien für die Herstellung von Kohlenstoffnanoröhrchen in einem Wirbelschichtreaktor in Frage kommt. Für alle diese Katalysatoren kann mit dem hier beschriebenen Verfahren der optimale Betriebspunkt für einen Wirbelschichtreaktor gefunden werden.

Besonders bedeutsam wird die korrekte Bestimmung des optimalen Betriebspunktes für einen Katalysator, der eine sehr hohe Ausbeute von Kohlenstoffnanoröhrchen bezogen auf die eingesetzte Katalysatormenge erzielt. Bevorzugt eingesetzt wird das Verfahren daher für einen Katalysator, der Mangan, Kobalt und ein Trägermaterial enthält, wobei Kobalt und Mangan in Mengen von 2 - 98 mol-% bezogen auf den Gehalt aktiver Komponenten in metallischer Form enthalten sind. In einer weiteren bevorzugten Weise wird das Verfahren für einen Katalysator eingesetzt, der zusätzlich Molybdän enthält.

Zur Herstellung von Carbon Nanotubes werden bevorzugt leichte gasförmige Kohlenwasserstoffe wie Aliphate und Olefine, einzeln oder als Mischung zersetzt. Welcher Kohlenwasserstoff hinsichtlich Ausbeute und Qualität der produzierten Kohlenstoffnanoröhrchen besonders geeignet ist, hängt von der Wahl des Katalysatormaterials ab. Auch hier gibt es eine Vielzahl von Kombinationen von katalytisch aktiven Metallen und Kohlenstoffdonatorgasen für die Herstellung von Kohlenstoffnanoröhrchen in einem Wirbelschichtreaktor. Für alle diese Kombinationen von Katalysator und Kohlenstoffdonatorgas kann mit dem hier beschriebenen Verfahren der optimale Betriebspunkt für einen Wirbelschichtreaktor gefunden werden.

Wiederum besonders bedeutsam wird die Bestimmung des optimalen Betriebspunktes für eine Kombination aus Katalysator und Kohlenstoffdonatorgas, die eine sehr hohe Ausbeute von Kohlenstoffnanoröhrchen bezogen auf die eingesetzte Katalysatormenge erzielt. Bevorzugt eingesetzt wird das Verfahren daher für einen Katalysator, der Mangan, Kobalt und ein Trägermaterial enthält, wobei Kobalt und Mangan in Mengen von 2-98 mol-% bezogen auf den Gehalt aktiver Komponenten in metallischer Form enthalten sind, kombiniert mit leichten Kohlenwasserstoffen als Eduktgasen.

Als Eduktgase kommen leichte Kohlenwasserstoffe wie Aliphate und Olefine in Betracht. Es können aber auch Alkohole, Kohlenoxide, insbesondere CO, aromatische Verbindungen mit und ohne Heteroatomen und funktionalisierte Kohlenwasserstoffe wie z.B. Aldehyde oder Ketone eingesetzt werden, solange diese am Katalysator zersetzt werden. Es können auch Gemische der oben genannten Kohlenwasserstoffe eingesetzt werden. Geeignet sind insbesondere z.B. Methan, Ethan, Propan, Butan oder höhere Aliphaten, Ethylen, Propylen, Buten, Butadien oder höhere Olefine oder aromatische Kohlenwasserstoffe oder Kohlenoxide oder Alkohole oder Kohlenwasserstoffe mit Heteroatomen. Bevorzugt werden kurz- und mittelkettige, also mit einer C-Anzahl von 1 bzw. 2 bis 10, aliphatische bzw. olefinische Kohlenwasserstoffe oder ein- oder zweikernige aromatische Kohlenwasserstoffe eingesetzt. Besonders bevorzugt werden Aliphaten ($C_xH_{2+2}$) und Olefine ($C_xH_y$) mit einer C-Anzahl x von x=1-4 bzw. 2-4 eingesetzt.

In einer weiteren bevorzugten Weise wird das Verfahren für einen Katalysator eingesetzt, der zusätzlich Molybdän enthält, kombiniert mit den oben genannten Eduktgasen. Weiterhin bevorzugt für die genannten Kombinationen aus Katalysator und Kohlenstoffdonatorgas ist die Zugabe von Wasserstoff zum Eduktgas.

Bei der Durchführung des Verfahrens wird nach Inertisierung des Reaktors mittels Verdrängung des Luftsauerstoffes durch Zugabe eines Inertgases wie z. B. Stickstoff oder Argon ein Gasgemisch am unteren Ende des Reaktors über einen geeigneten Gasverteiler in den Apparat geleitet. Das Gasgemisch besteht aus 0-90 Vol.-% Wasserstoff, 0 - 90 Vol.-% eines Inertgases wie z. B. Stickstoff oder Argon sowie 10 - 100 Vol.-% eines Kohlenstoffdonatorgases, bevorzugt 0 - 40 % Wasserstoff, 0 - 40 % Inertgas und 40 - 100 % Kohlenstoffdonatorgas, besonders bevorzugt 0 - 10 % Wasserstoff, 0 - 10 % Inertgas und 80 - 100 % Kohlenstoffdonatorgas. Als Kohlenstoffdonator sind verschiedene Substanzen denkbar, Beispiele sind oben bereits erläutert worden. Das Gasgemisch kann vorgewärmt oder nicht vorgewärmt in den Reaktor geleitet werden, wobei die maximale Gasvorwärmtemperatur diejenige Temperatur, bei der sich das Kohlenstoffdonatorgas z. B. an den metallischen Rohrleitungen oder am metallischen Begaser zersetzt, nicht überschreiten darf. Bevorzugt ist ein Bereich der Gaseintrittstemperatur zwischen 25 °C und 300 °C, besonders bevorzugt zwischen 200 °C und 300 °C. Das Verhältnis von Gasleerrohrgeschwindigkeit zu Mindestfluidisierungsgeschwindigkeit für alle im Reaktor vorhandenen Partikeln liegt dabei zwischen 1,1 und 60. Bevorzugt ist ein Geschwindigkeitsverhältnis zwischen 2 und 30, besonders bevorzugt zwischen 5 und 20.

Am Katalysator bilden sich Kohlenstoff-Nanoröhrchen, wodurch die Katalysatorpartikeln gesprengt werden und Agglomeratpartikeln aus Kohlenstoff-Nanoröhrchen und Katalysatorresten entstehen.

Die so hergestellten Kohlenstoffnanoröhrchen können meist, soweit dies die Applikation zulässt, aufgrund des geringen Katalysatorgehaltes im Endprodukt ohne vorherige Aufarbeitung eingesetzt werden. Gegebenenfalls können die Materialien aufgereinigt werden, z. B. durch chemisches Lösen der Katalysator- und Trägerreste, durch Oxidation der in sehr geringen Mengen gebildeten Anteile amorphen Kohlenstoffs oder durch eine thermische Nachbehandlung in einem Inert- oder Reaktivgas. Es ist möglich, die hergestellten Kohlenstoffnanoröhrchen chemisch zu funktionalisieren, um z. B. verbesserte Einbindungen in eine Matrix zu erhalten oder die Oberflächeneigenschaften gezielt an die gewünschte Anwendung anzupassen.

Die nach dem erfindungsgemäßen Verfahren erzeugten Kohlenstoffnanoröhrchen eignen sich zur Verwendung als Additive in Polymeren, insbesondere zur mechanischen Verstärkung und zur Erhöhung der elektrischen Leitfähigkeit. Die erzeugten Kohlenstoffnanoröhrchen können ferner als Material für die Gas und Energiespeicherung, zur Färbung und als Flammschutzmittel eingesetzt werden. Aufgrund der guten elektrischen Leitfähigkeit können die erfindungsgemäß hergestellten Kohlenstoffnanoröhrchen als Elektrodenmaterial oder zur Herstellung von Leiterbahnen und leitfähigen Strukturen eingesetzt werden. Es ist auch möglich, die erfindungsgemäß hergestellten Kohlenstoffnanoröhrchen als Elektronenemitter in Displays einzusetzen. Bevorzugt werden die Kohlenstoffnanoröhrchen in Polymerkompositmaterialien, Baustoffen, Keramik- oder Metallkompositmaterialien zur Verbesserung der elektrischen oder Wärme-Leitfähigkeit und mechanischen Eigenschaften, zur Herstellung von leitfähigen oder mechanisch verstärkten Beschichtungen und Kompositmaterialien, als Farbstoff, in Batterien, Kondensatoren, Displays (z. B. Flat Screen Displays) oder Leuchtmitteln, als Field Effect Transistor, als Speichermedium z. B. für Wasserstoff oder Lithium, in Membranen z. B. für die Reinigung von Gasen, als Katalysator oder als Trägermaterial z. B. für katalytisch aktive Komponenten in chemischen Reaktionen, in Brennstoffzellen, im medizinischen Bereich z. B. als Gerüst zur Wachstumssteuerung von Zellgewebe, im diagnostischen Bereich z. B. als Marker, sowie in der chemischen und physikalischen Analytik (z. B. in Rasterkraftmikroskopen) eingesetzt.

**Abbildungen:**

<u>Abbildung 1</u>: Geschwindigkeitsverläufe zur Charakterisierung von $d_{kat,min}$ : Gasmischung aus $C_2H_4$, $H_2$ und $N_2$ im Verhältnis 0,4 zu 0,4 zu 0,2 bei 650°C, 1 bar, $\rho_{Kat}$=1500 kg/m$^3$ und $\rho_P$=400kg/m$^3$.

**Beispiele:**

Im Folgenden wird das erfindungsgemäße Verfahren anhand einiger Beispiele illustriert, ohne sich darauf zu begrenzen.

**Beispiel 1:**

500 mg eines Katalysators bestehend aus den Aktivkomponenten Mangan (37 Gew.-%) und Kobalt (43 Gew.-%) sowie den Trägermaterialien Magnesiumoxid (10 Gew.-%) und Aluminiumoxid (10 Gew.-%) werden in einen Quarzglas-Wirbelschichtreaktor mit einem Innendurchmesser von 49 mm gegeben. Die Katalysatorpartikeln haben einen Durchmesser zwischen 80 $\mu$m und 100 $\mu$m. Der Reaktor wird von außen auf eine Temperatur von 650 °C beheizt, nach Inertisierung wird ein Gasgemisch bestehend aus 40 Vol.-% Ethylen, 40 Vol.-% Wasserstoff und 20 Vol.-% Stickstoff mit einer Temperatur von 25 °C durch eine Glasfritte am unteren Ende des Reaktors in den Apparat geleitet; die Gasleerrohrgeschwindigkeit bei Betriebsbedingungen beträgt 31,64 cm/s. Am Katalysator bilden sich Kohlenstoff-Nanoröhrchen, wodurch die Katalysatorpartikeln gesprengt werden und Agglomeratpartikeln aus Kohlenstoff-Nanoröhrchen und Katalysatorresten entstehen. Während des Versuches werden die Temperaturen im Reaktor an Positionen 1 cm, 5 cm und 15 cm oberhalb der Glasfritte beobachtet. Während der gesamten Versuchszeit behalten alle Temperatur-Messstellen annähernd den eingestellten Sollwert bei, was auf eine gute Durchmischung infolge guter Fluidisierung im Reaktor hinweist. Nach 38 Minuten wird der Versuch beendet; nach Inertisierung und Abkühlung werden dem Reaktor 76,5 g Produkt entnommen, für das mittels Laserbeugungsmessung ein mittlerer Außendurchmesser $d_{0,5}$ von 1.105 $\mu$m und ein maximaler Außendurchmesser $d_{0,9}$ von 1.539 $\mu$m bestimmt wird.

**Beispiel 2:**

500 mg eines Katalysators bestehend aus den Aktivkomponenten Mangan (37 Gew.-%) und Kobalt (43 Gew.-%) sowie den Trägermaterialien Magnesiumoxid (10 Gew.-%) und Aluminiumoxid (10 Gew.-%) werden in einen Quarzglas-Wirbelschichtreaktor mit einem Innendurchmesser von 49 mm gegeben. Die Katalysatorpartikeln haben einen Durchmesser zwischen 63 $\mu$m und 80 $\mu$m, sind also deutlich feiner als in Beispiel 1. Der Reaktor wird von außen auf eine Temperatur von 650 °C beheizt, nach Inertisierung wird ein Gasgemisch bestehend aus 40 Vol.-% Ethylen, 40 Vol.-% Wasserstoff und 20 Vol.-% Stickstoff mit einer Temperatur von 25 °C durch eine Glasfritte am unteren Ende des Reaktors in den Apparat geleitet; die Gasleerrohrgeschwindigkeit bei Betriebsbedingungen beträgt 31,64 cm/s wie in Beispiel 1. Am Katalysator bilden sich Kohlenstoff-Nanoröhrchen, wodurch die Katalysatorpartikeln gesprengt werden und Agglomeratpartikeln aus Kohlenstoff-Nanoröhrchen und Katalysatorresten entstehen. Nach 31 Minuten wird der Versuch beendet; nach Inertisierung und Abkühlung werden dem Reaktor 20,8 g Produkt entnommen, für das mittels Laserbeugungsmessung ein mittlerer Außendurchmesser $d_{0,5}$ von 667 $\mu$m und ein maximaler Außendurchmesser $d_{0,9}$ von 1.215 $\mu$m bestimmt wird. Die im Vergleich zu Beispiel 1 sehr geringe Produktmenge wird darauf zurückgeführt, dass ein Teil des feinkörnigen Katalysators aufgrund der oberhalb der Sinkgeschwindigkeit liegenden Gasgeschwindigkeit aus dem Reaktor ausgetragen wurde.

**Beispiel 3:**

500 mg eines Katalysators bestehend aus den Aktivkomponenten Mangan (37 Gew.-%) und Kobalt (43 Gew.-%) sowie den Trägermaterialien Magnesiumoxid (10 Gew.-%) und Aluminiumoxid (10 Gew.-%) werden in einen Quarzglas-Wirbelschichtreaktor mit einem Innendurchmesser von 49 mm gegeben. Die Katalysatorpartikeln haben einen Durchmesser zwischen 100 $\mu$m und 125 $\mu$m, sind also deutlich gröber als in Beispiel 1. Der Reaktor wird von außen auf eine Temperatur von 650 °C beheizt, nach Inertisierung wird wie in Beispiel 1 ein Gasgemisch bestehend aus 40 Vol.-% Ethylen, 40 Vol.-% Wasserstoff und 20 Vol.-% Stickstoff mit einer Temperatur von 25 °C durch eine Glasfritte am unteren Ende des Reaktors in den Apparat geleitet; die Gasleerrohrgeschwindigkeit bei Betriebsbedingungen beträgt wie in Beispiel 1 31,64 cm/s. Am Katalysator bilden sich Kohlenstoff-Nanoröhrchen, wodurch die Katalysatorpartikeln gesprengt werden und Agglomeratpartikeln aus Kohlenstoff-Nanoröhrchen und Katalysatorresten entstehen. Während des Versuches werden die Temperaturen im Reaktor an Positionen 1 cm, 5 cm und 15 cm oberhalb der Glasfritte beobachtet. Nach ca. 15 Minuten Versuchsdauer wird ein deutliches Absinken der Temperatur 1 cm oberhalb der Fritte beobachtet. Dies wird darauf zurückgeführt, dass es im Reaktor zu einer Segregation kommt und die größten entstandenen Agglomeratpartikeln sich auf der Fritte ablagern und nicht mehr fluidisiert werden, da ihre Mindestfluidisierungsgeschwindigkeit unterschritten ist; dem Fachmann ist bekannt, dass der Wärmeübergangswiderstand von einer Wand an ein Festbett erheblich höher ist als der von einer Wand in ein Wirbelbett, weshalb bei einer nur schwach exothermen Reaktion wie der hier betrachteten eine Abkühlung des nicht fluidisierten Bereichs zu erwarten ist, wenn das Eduktgas - wie hier der Fall - kalt in den Reaktor geleitet wird. Nach 31 Minuten wird der Versuch beendet; nach Inertisierung und Abkühlung werden dem Reaktor 81 g Produkt entnommen, für das mittels Laserbeugungsmessung ein mittlerer Außendurchmesser $d_{0,5}$ von 1.283 $\mu$m und ein maximaler Außendurchmesser $d_{0,9}$ von 1.625 $\mu$m bestimmt wird.

**Beispiel 4 (Rechenbeispiel):**

An Hand eines Rechenbeispiels wird im Folgenden die Vorgehensweise zur Bestimmung des minimalen Katalysatordurchmessers, $d_{Kat,min}$, bei gegebenem maximalem Agglomeratdurchmesser, $d_{p,max}$, verdeutlicht. Die in Tab. 1 aufgeführten Eingangswerte sind für die Durchführung der Berechnung erforderlich.

Tabelle 1: Eingangsparameter zur Ermittlung des minimalen Katalysatordurchmessers bei gegebenem maximalem Agglomeratdurchmesser

| | |
|---|---|
| Dichte des Agglomerats bei $d_{p,max}$ : $\rho_p$ [kg/m$^3$] | 400 |
| Dichte des Katalysators: $\rho_{Kat}$ [kg/m$^3$] | 1500 |
| Maximale Durchmesser des Agglomerats: $d_{p,max}$ [$\mu$m] | 2000 |
| Molenanteile : $X_{C2H4}$; $X_{H2}$; $X_{N2}$ [-] | 0,4 ; 0,4 ; 0,2 |
| Betriebstemperatur: $T$ [°C] | 650 |
| Betriebsdruck: $P$ [bar] | 1 |
| Formfaktor der Katalysatorpartikeln: $\phi_s$ [-] | 1 |

Um die oben erläuterte Bedingung $U_t(d_{xat,min}) = U_o(d_{p,max})$ zu erfüllen, wird schrittweise folgendermaßen vorgegangen:

- Die Bestimmung der Mindestfluidisierungsgeschwindigkeit $U_{mf}$ erfolgt mit der bereits oben erwähnten Gl. (1). Mit Angabe der Daten in Tab. 1 lässt sich die dynamische Viskosität des Gasgemisches, $\eta_G$, an Hand der Komponentenviskositäten beispielsweise durch die semiempirische Formel von Wilke (siehe Bird, R. B., Stewart, W.E. und Lightfoot, E.N., "Transport Phenomena", John Wiley, 1960, S.24) ausrechnen. Dies ergibt für die in Tabelle 1 angegebene Gasmischung $\eta_G = 2,98 \times 10^{-5}$ Pas. Die Dichte des Gasgemisches wird unter Verwendung der idealen Gasgleichung zu $\rho_G = 0,23$ kg/m$^3$ ermittelt. Alle Terme auf der rechten Seite von Gl.(1) sind nun bekannt und $U_{mf}$ ist dadurch bestimmt: $U_{mf} = 0,298$ m/s.

- Es wird als Erfahrungswert angenommen, dass der Betrieb des Reaktors beim Dreifachen des Wertes $U_{mf}$ eine hinreichend sichere Fluidisierung gewährleistet. Demzufolge ist $U_o(d_{p,max}) = 0,894$ m/s.

- Der letzte Schritt löst die oben erwähnte Gleichung, $U_t(d_{Kat,min}) = U_o(d_{p,max})$ iterativ, denn $U_t$, $U_o$, und $(d_{p.max})$ sind bekannt, während das Verhältnis zwischen $U_t$ und $d_{kat,min}$ durch Gl.(2) ausgedrückt wird.

Für das aktuelle Beispiel ist das Ergebnis nach iterativem Verfahren $d_{Kat,min} = 195,8$ $\mu$m. Das bedeutet, dass alle Katalysatorpartikeln unter dieser Größe aus dem Reaktor ausgetragen werden. Dies wird auch an Hand von Abb. 1 durch Verfolgen der gestrichelten Linien (Schritte 1 bis 5) verdeutlicht.

**Patentansprüche**

1. Verfahren zur Herstellung von Kohlenstoffnanoröhrchen durch Zersetzung eines gasförmigen Kohlenwasserstoffs an einem heterogenen gegebenenfalls geträgerten Katalysator, insbesondere auf Basis von Mangan und Cobalt und gegebenenfalls Molybdän, in einem Wirbelschichtreaktor, **dadurch gekennzeichnet, dass** die in den Wirbelschichtreaktor gegebenen Katalysatorpartikeln einen Außendurchmesser im Bereich von 30 $\mu$m bis 600 $\mu$m aufweisen, die Partikelgrößen von Katalysator und Kohlenstoffnanoröhrchen-Agglomeraten so gewählt sind, dass das Verhältnis von Gasleenohrgeschwindigkeit zu Mindestfluidisierungsgeschwindigkeit für alle im Wirbelschichtreaktor vorhandenen Katalysator- und Agglomeratpartikeln zwischen 1,1 und 60 liegt und gleichzeitig die Gasgeschwindigkeit im Reaktor unterhalb der Sinkgeschwindigkeit der Partikel festgelegt oder eine Vorrichtung zur Rückführung ausgetragener Partikel eingesetzt wird und wobei die Abfuhr der gebildeten Kohlenstoffnanoröhrchen aus dem Reaktor mittels einer Sichter-Vorrichtung erfolgt, welche nur Kohlenstoffnanoröhrchen-Agglomerate oberhalb eines definierten Mindestdurchmessers aus dem Reaktor entfernt.

2. Verfahren nach Anspruch 1, **dadurch gekennzeichnet, dass** die hergestellten Kohlenstoffnanoröhrchen einen mittleren Außendurchmesser von 3 nm bis 150 nm aufweisen.

3. Verfahren nach einem der Ansprüche 1 bis 2, **dadurch gekennzeichnet, dass** als Edukte Kohlenwasserstoffe, insbesondere Aliphaten und Olefine, und ferner Alkohole, Kohlenoxide, insbesondere CO, aromatische Verbindungen mit und ohne Heteroatomen und funktionalisierte Kohlenwasserstoffe einzeln oder als Mischung eingesetzt werden.

4. Verfahren nach Anspruch 3, **dadurch gekennzeichnet, dass** es sich bei den Kohlenwasserstoffen um einzelne oder Mischungen ausgewählt aus einer Gruppe beinhaltend kurz- und mittelkettige aliphatische bzw. olefinische Kohlenwasserstoffe mit einer C-Anzahl von 1 bzw. 2 bis 10, oder ein- oder zweikernige aromatische Kohlenwasserstoffe, insbesondere Methan, Ethan, Propan, Butan, Pentan, Hexan, Ethylen, Propylen, Buten, Butadien, besonders bevorzugt Aliphaten ($C_xH_{2x}+2$) mit einer C-Anzahl x von x = 1-4, und Olefine ($C_xH_y$) mit einer C-Anzahl von x = 2-4 handelt.

5. Verfahren nach einem der Ansprüche 1 bis 4, **dadurch gekennzeichnet, dass** der Katalysator in den Reaktionsraum in einer Form eingebracht wird, in der die hauptsächlich katalytisch aktiven Komponenten als Oxide, teilweise oder ganz reduziert oder als Hydroxide vorliegen.

6. Verfahren zur Herstellung von Kohlenstoffnanoröhren nach einem der Ansprüche 1 bis 5 in einem Wirbelschichtreaktor, **dadurch gekennzeichnet, dass** die optimale Gasleerrohrgeschwindigkeit abhängig von Katalysator- und Agglomeratgröße, Partikeldichten und Gaseigenschaften eingestellt wird, wobei diese anhand der Katalysatordichte bzw. des Katalysatordurchmessers und des Maximaldurchmessers $d_{p,max}$ des Agglomerates berechnet wird.

7. Verfahren nach Anspruch 6, **dadurch gekennzeichnet, dass** die Ermittlung gemäß folgendem Rechenweg erfolgt:

a Die Betriebsbedingungen und Partikeleigenschaften werden herangezogen, um eine Mindestfluidisierungsgeschwindigkeit, $U_{mf}$; der Agglomerate zu bestimmen:

$$U_{mf} = \frac{\eta_G}{d_P \rho_G} \left\{ \left[ 33{,}7^2 + 0{,}0408 \cdot \frac{d_P^3 \rho_G (\rho_P - \rho_G) \cdot g}{\eta_G^2} \right]^{\frac{1}{2}} - 33{,}7 \right\} \quad (1)$$

wobei gilt (in SI-Einheiten):

- $\eta_G$= dynamic viscosity of the gas mixture at the operating temperature
- $\rho_G$ = density of the gas mixture at the operating temperature
- $d_p$ = external diameter of the agglomerate, regarded in this analysis as the stated maximum diameter, $d_{p,max}$
- $\rho_P$ = particle density of the agglomerate
- $g$ = acceleration of gravity

und wobei die Mindestfluidisierungsgeschwindigkeit für den größten zu erwartenden Agglomeratdurchmesser $d_{p,max}$ bestimmt wird und
**b** die Betriebsgeschwindigkeit, $U_o$, entspricht einem Mehrfachen von $U_{mf}$ für den größten zu erwartenden Agglomeratdurchmesser.
c die Sinkgeschwindigkeit des Katalysatorpartikels, $U_1$, wird wie folgt berechnet:

$$U_t = \left( \frac{\eta_G (\rho_{cat} - \rho_G) \cdot g}{\rho_G^2} \right)^{1/3} \cdot \left[ \frac{18}{d_{cat}^2} \cdot \left( \frac{\eta_G^2}{\rho_G (\rho_{cat} - \rho_G) \cdot g} \right)^{2/3} + \frac{(2.335 - 1.744 \cdot \phi_s)}{d_{cat}^{1/2}} \cdot \left( \frac{\eta_G^2}{\rho_G (\rho_{cat} - \rho_G) \cdot g} \right)^{1/6} \right]^{-1}$$

$$(2)$$

wobei für den Formfaktor, $\emptyset_s = 1$ angenommen wird und $p_{Kat}$ und $d_{Kat}$ der Katalysatorpartikel-dichte bzw. dem Katalysatorpartikeldurchmesser entsprechen; und

d der minimale Katalysatordurchmesser charakterisiert wird, der bei der herrschenden Betriebsgeschwindigkeit, $U_o$, nicht aus dem Wirbelschichtreaktor ausgetragen wird, indem mit Hilfe der Gleichung 2 für die Sinkgeschwindigkeit nach demjenigen $dK_{at}$-Wert, bezeichnet durch $d_{Kat.min,}$ gesucht wird, der die Bedingung $U_1(d_{Kat.min}) = U_o(d_{p.max})$ erfüllt.

## Claims

1. Process for the production of carbon nanotubes by decomposition of a gaseous hydrocarbon on an optionally supported heterogeneous catalyst, especially on the basis of manganese and cobalt and optionally molybdenum, in a fluidized bed reactor, **characterized in that** the catalyst particles fed to the fluidized bed reactor have an external diameter in the range of from 30 $\mu$m to 600 $\mu$m, the particle sizes of catalyst and carbon nanotube agglomerates are chosen such that the ratio of gas empty tube speed to minimum fluidization speed for all the catalyst and agglomerate particles present in the fluidized bed reactor is between 1.1 and 60, and at the same time the gas speed in the reactor is set below the sinking speed of the particles, or a device for recycling discharged particles is employed, and wherein the carbon nanotubes formed are removed from the reactor by means of a sifting device which removes from the reactor only carbon nanotube agglomerates above a defined minimum diameter.

2. Process according to claim 1, **characterized in that** the carbon nanotubes produced have an average external diameter of from 3 nm to 150 nm.

3. Process according to one of claims 1 to 2, **characterized in that** hydrocarbons, especially aliphatics and olefins, and also alcohols, carbon oxides, in particular CO, aromatic compounds with and without hetero atoms and functionalized hydrocarbons are employed, individually or as a mixture, as educts.

4. Process according to claim 3, **characterized in that** the hydrocarbons are individuals or mixtures chosen from a group consisting of short- and medium-chain aliphatic or olefinic hydrocarbons having a C number of from 1 or, respectively, 2 to 10, or mono- or dinuclear aromatic hydrocarbons, especially methane, ethane, propane, butane, pentane, hexane, ethylene, propylene, butene, butadiene, more preferably aliphatics ($C_xH_{2x+2}$) having a C number x of x = 1-4, and olefins ($C_xH_y$) having a C number of x = 2-4.

5. Process according to one of claims 1 to 4, **characterized in that** the catalyst is introduced into the reaction chamber in a form in which the chiefly catalytically active components are in the form of oxides, in a partly or completely reduced form, or in the form of hydroxides.

6. Process for the production of carbon nanotubes according to one of claims 1 to 5 in a fluidized bed reactor, **characterized in that** the optimum gas empty tube speed is adjusted depending on the catalyst and agglomerate size, particles densities and gas properties, this being calculated with the aid of the catalyst density or the catalyst diameter and the maximum diameter $d_{p,max}$ of the agglomerate.

7. Process according to claim 6, **characterized in that** the determination is carried out according to the following calculation route:

   a the operating conditions and particle properties are used in order to determine a minimum fluidization speed, $U_{mf}$, of the

$$U_{mf} = \frac{\eta_G}{d_P \rho_G} \left\{ \left[ 33.7^2 + 0.0408 \cdot \frac{d_P^3 \rho_G (\rho_P - \rho_G) \cdot g}{\eta_G^2} \right]^{1/2} - 33.7 \right\} \quad (1)$$

wherein (in SI units):

- $\eta_G$ = dynamic viscosity of the gas mixture at the operating temperature
- $\rho_G$ = density of the gas mixture at the operating temperature
- $d_p$ = external diameter of the agglomerate, regarded in this analysis as the stated maximum diameter, $d_{p,max}$
- $\rho_P$ = particle density of the agglomerate
- $g$ = acceleration of gravity

and wherein the minimum fluidization speed is determined for the largest agglomerate diameter to be expected $d_{p,max}$ and

**b** the operating speed, $U_o$, corresponds to a multiple of $U_{mf}$ for the largest agglomerate diameter to be expected,

**c** the sinking speed of the catalyst particle, $U_1$, is calculated as follows:

$$U_l = \left( \frac{\eta_G (\rho_{cat} - \rho_G) \cdot g}{\rho_G^2} \right)^{1/3} \cdot \left[ \frac{18}{d_{cat}^2} \cdot \left( \frac{\eta_G^2}{\rho_G (\rho_{cat} - \rho_G) \cdot g} \right)^{2/3} + \frac{(2.335 - 1.744 \cdot \phi_s)}{d_{cat}^{1/2}} \cdot \left( \frac{\eta_G^2}{\rho_G (\rho_{cat} - \rho_G) \cdot g} \right)^{1/6} \right]^{-1}$$

$$(2)$$

wherein a shape factor $\phi_s$ = 1 is assumed and $\rho_{cat}$ and $d_{cat}$ correspond to the catalyst particle density and, respectively, the catalyst particle diameter; and

**d** the minimum catalyst diameter which is not discharged from the fluidized bed reactor at the prevailing operating speed, $U_o$, is **characterized by** searching, with the aid of equation 2 for the sinking speed, for that $d_{cat}$ value, designated $d_{cat,min}$, which meets the condition $U_1(d_{cat,min}) = U_o(d_{p,max})$.

**Revendications**

1. Procédé de fabrication de nanotubes de carbone par décomposition d'un hydrocarbure gazeux sur un catalyseur hétérogène éventuellement supporté, notamment à base de manganèse et de cobalt et éventuellement de molybdène, dans un réacteur à lit fluidisé, **caractérisé en ce que** les particules de catalyseur introduites dans le réacteur à lit fluidisé présentent un diamètre extérieur dans la plage allant de 30 μm à 600 μm, les tailles de particules du catalyseur et des agglomérats de nanotubes de carbone sont choisies de sorte que le rapport entre la vitesse gazeuse en tube vide et la vitesse de fluidisation minimale pour toutes les particules de catalyseur et d'agglomérats présentes dans le réacteur à lit fluidisé soit compris entre 1,1 et 60, et que simultanément la vitesse gazeuse dans le réacteur soit fixée en dessous de la vitesse de décantation des particules, ou un dispositif pour le recyclage des particules déchargées est utilisé et le déchargement des nanotubes de carbone formés du réacteur a lieu par un dispositif de tamisage, qui ne décharge du réacteur que les agglomérats de nanotubes de carbone au-dessus d'un diamètre minimal défini.

2. Procédé selon la revendication 1, **caractérisé en ce que** les nanotubes de carbone fabriqués présentent un diamètre extérieur moyen de 3 nm à 150 nm.

3. Procédé selon l'une quelconque des revendications 1 à 2, **caractérisé en ce que** des hydrocarbures, notamment des composés aliphatiques et des oléfines, et également des alcools, des oxydes de carbone, notamment CO, des composés aromatiques avec et sans hétéroatomes et des hydrocarbures fonctionnalisés sont utilisés individuellement ou en mélange en tant que réactifs.

**4.** Procédé selon la revendication 3, **caractérisé en ce que** les hydrocarbures sont des hydrocarbures individuels ou des mélanges choisis dans un groupe contenant les hydrocarbures aliphatiques et oléfiniques à chaîne courte et moyenne, ayant un nombre de C de 1 ou 2 à 10, ou les hydrocarbures aromatiques à un ou deux noyaux, notamment le méthane, l'éthane, le propane, le butane, le pentane, l'hexane, l'éthylène, le propylène, le butène, le butadiène, de manière particulièrement préférée les composés aliphatiques ($C_xH_{2x+2}$) ayant un nombre de C x de x = 1 à 4, et les oléfines ($C_xH_y$) ayant un nombre de C de x = 2 à 4.

**5.** Procédé selon l'une quelconque des revendications 1 à 4, **caractérisé en ce que** le catalyseur est introduit dans la chambre de réaction sous une forme sous laquelle les composants catalytiquement actifs se présentent principalement sous la forme d'oxydes, réduits en partie ou en totalité, ou sous la forme d'hydroxydes.

**6.** Procédé de fabrication de nanotubes de carbone selon l'une quelconque des revendications 1 à 5 dans un réacteur à lit fluidisé, **caractérisé en ce que** la vitesse gazeuse en tube vide optimale est ajustée en fonction de la taille du catalyseur et des agglomérats, des densités des particules et des propriétés du gaz, celle-ci étant calculée à partir de la densité du catalyseur ou du diamètre du catalyseur et du diamètre maximal $d_{p,max}$ des agglomérats .

**7.** Procédé selon la revendication 6, **caractérisé en ce que** la détermination a lieu selon la méthode suivante :

a les conditions d'exploitation et les propriétés des particules sont utilisées pour déterminer une vitesse de fluidisation minimale, $U_{mf}$, des agglomérats :

$$U_{mf} = \frac{\eta_G}{d_P \rho_G} \left\{ \left[ 33,7^2 + 0,0408 \cdot \frac{d_P^3 \rho_G (\rho_P - \rho_G) \cdot g}{\eta_G^2} \right]^{1/2} - 33,7 \right\} \quad (1)$$

dans laquelle (en unités SI) :

- $\eta_G$ = viscosité dynamique du mélange gazeux à la température d'exploitation,
- $\rho_G$ = densité du mélange gazeux à la température d'exploitation,
- $d_p$ = diamètre extérieur de l'agglomérat, considéré dans cette analyse comme le diamètre maximal indiqué, $d_{p,max}$,
- $\rho_p$ = densité de particules de l'agglomérat,
- $g$ = accélération de la pesanteur,

et la vitesse de fluidisation minimale étant déterminée pour le diamètre d'agglomérat $d_{p,max}$ maximal attendu, et b la vitesse d'exploitation, $U_0$, correspond à un multiple de $U_{mf}$ pour le diamètre d'agglomérat maximal attendu, c la vitesse de décantation des particules de catalyseur, $U_1$, est calculée de la manière suivante :

$$U_t = \left( \frac{\eta_G (\rho_{cat} - \rho_G) \cdot g}{\rho_G^2} \right)^{1/3} \cdot \left[ \frac{18}{d_{cat}^2} \cdot \left( \frac{\eta_G^2}{\rho_G (\rho_{cat} - \rho_G) \cdot g} \right)^{2/3} + \frac{(2.335 - 1.744 \cdot \phi_s)}{d_{cat}^{1/2}} \cdot \left( \frac{\eta_G^2}{\rho_G (\rho_{cat} - \rho_G) \cdot g} \right)^{1/6} \right]^{-1} \quad (2)$$

le facteur de forme $\varnothing_s$ = 1 étant supposé, et $p_{kat}$ et $d_{kat}$ correspondant à la densité des particules de catalyseur et au diamètre des particules de catalyseur ; et
d le diamètre de catalyseur minimal qui n'est pas déchargé du réacteur à lit fluidisé à la vitesse d'exploitation $U_0$ qui règne est caractérisé en recherchant à l'aide de l'équation 2 pour la vitesse de décantation la valeur $d_{Kat}$, identifiée par $d_{Kat,min}$, qui satisfait la condition $U_1(d_{kat,min}) = U_0(d_{p,max})$.

## Fig.1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO A8603455 A1
- WO 03004410 A1
- US 6358878 A
- US 6518218 A
- CN 1443708
- CA 2374848 A1
- EP 1399384 A2
- EP 1375424 A1
- WO 9007023 A1
- EP 1391425 A1

### In der Beschreibung aufgeführte Nicht-Patentliteratur

- **K.P. DE JONG ; J.W. GEUS.** *Catal. Rev.-Sci. Eng.,* 2000, vol. 42 (4), 481-510
- **PH. MAURON et al.** Fluidised-bed CVD synthesis of carbon nanotubes on Fe2O3/MgO. *Diamond and Related Materials,* 2003, vol. 12, 780-785
- **D. VENEGONI et al.** Parametric study for the growth of carbon nanotubes by catalytic chemical vapor deposition in a fluidized bed reactor. *Carbon,* 2002, vol. 40, 1799-1807
- **M. CORRIAS et al.** Carbon nanotubes produced by fluidized bed catalytic CVD: first approach of the process. *Chemical Engineering Science,* 2003, vol. 58, 4475-4482
- **Y. HAO et al.** Agglomerated CNTs synthesized in a fluidized bed reactor: Agglomerate structure and formation mechanism. *Carbon,* 2003, vol. 41, 2855-2863
- **KUNII, D. ; LEVENSPIEL, O.** Fluidization Engineering. Butterworth-Heinemann, 1991, 70
- **WEN ; YU.** *AIChE J.,* 1966, vol. 12, 610
- **KUNII ; LEVENSPIEL.** Fluidization Engineering. Butterworth-Heinemann, 1991, 80
- **BIRD, R. B. ; STEWART, W.E. ; LIGHTFOOT, E.N.** Transport Phenomena. John Wiley, 1960, 24